# EUROPÄISCHE PATENTSCHRIFT

(11) **EP 3 951 145 B1**
(45) Veröffentlichungstag und Bekanntmachung des Hinweises auf die Patenterteilung: **13.12.2023**
(21) Anmeldenummer: 21182473.5
(22) Anmeldetag: 29.06.2021
(51) Int. Cl.: F01N 3/20

(54) **BEHEIZTE EINSPRITZDÜSE ZUR REDUKTIONSMITTELAUFBEREITUNG, REDUKTIONSMITTELDOSIERSYSTEM UND VERFAHREN ZU BETRIEB EINES REDUKTIONSMITTELDOSIERSYSTEMS**
HEATED INJECTION NOZZLE FOR THE PREPARATION OF REDUCING AGENT, REDUCING AGENT METERING SYSTEM AND METHOD FOR OPERATING A REDUCING AGENT METERING SYSTEM
BUSE D'INJECTION CHAUFFÉE POUR LA PRÉPARATION DE L'AGENT RÉDUCTEUR, SYSTÈME DE DOSAGE DE L'AGENT RÉDUCTEUR ET PROCÉDÉ DE FONCTIONNEMENT D'UN SYSTÈME DE DOSAGE DE L'AGENT RÉDUCTEUR

(30) Priorität: 06.08.2020 DE 102020004766
(43) Veröffentlichungstag der Anmeldung: 09.02.2022
(73) Patentinhaber: Albonair GmbH, 44263 Dortmund (DE)
(72) Erfinder: Kassel, Armin, 58119 Hagen (DE)
(74) Vertreter: Patentanwaltskanzlei Methling

(56) Entgegenhaltungen:
- DE-A1-102005 044 780
- DE-A1-102006 047 019
- DE-A1-102011 077 951
- US-A1- 2009 294 552

## Beschreibung

Die Erfindung betrifft eine Einspritzdüse zur Einspritzung eines Reduktionsmittels in den Abgasstrom eines Verbrennungsmotors zur selektiven katalytischen Reduktion, wobei die Einspritzdüse einen äußeren Düsenmantel, einen in dem Düsenmantel angeordneten Innenkörper sowie einen Düsenkopf mit zumindest einer Austrittsöffnung umfasst, wobei der Düsenmantel einen Reduktionsmitteleinlass aufweist und zwischen dem Düsenmantel und dem Innenkörper zumindest ein vom Reduktionsmitteleinlass zur Austrittsöffnung verlaufender Strömungskanal ausgebildet ist, wobei die Einspritzdüse zumindest ein Heizelement aufweist.

Derartige Düsen sind aus der DE 10 2005 044 780 A1 und der DE 10 2011 077 951 A1 bekannt. Aus der DE 10 2006 047 019 A1 und der US 2009/294552 A1 sind Düsen bekannt, bei denen der Strömungskanal durch ein Gewinde um den Innenkörper herum gebildet ist.

Derartige Düsen sind aus dem Stand der Technik bekannt. Nachteilig ist dabei, dass der Aufbau zur Beheizung der Düse komplex ist und sehr viel Bauraum einnimmt. Ein weiterer Nachteil bei den bekannten Düsen besteht darin, dass der gewünschte Effekt der Beheizung der Düse zur Steigerung der Effektivität der selektiven katalytischen Reduktion in der Kaltstartphase des Verbrennungsmotors nur unzureichend eintritt.

Ferner betrifft die Erfindung ein Reduktionsmitteldosiersystem zur Einspritzung eines Reduktionsmittels in den Abgasstrom eines Verbrennungsmotors zur selektiven katalytischen Reduktion, mit zumindest einer Förderpumpe, mittels derer Reduktionsmittel aus einem Reduktionsmitteltank über eine Saugleitung aus dem Tank angesaugt, über zumindest eine Druckleitung gefördert und über zumindest eine Düse in den Abgasstrom des Verbrennungsmotors eingeleitet wird.

Katalysatoren zur selektiven katalytischen Reduktion (englisch: selective catalyic reduction, abgekürzt: SCR), sogenannte SCR-Katalysatoren, werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel mit einer Dosiervorrichtung in das Abgassystem eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil, insbesondere gemäß DIN 70070, eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im Wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion der Ausstoß von Stickoxyden um etwa 90 % reduziert.

Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt. Die Begriffe Reduktionsmitteldosiersystem bzw. Dosiersystem werden im Sinne der Erfindung synonym verwendet. Die Begriffe Düse und Einspritzdüse werden ebenfalls synonym verwendet.

Bei den bekannten Reduktionsmitteldosiersystemen zur Einspritzung eines Reduktionsmittels in den Abgasstrom eines Verbrennungsmotors zur selektiven katalytischen Reduktion können sich die relativ niedrigen Temperaturen der Abgase z. B. bei einem Kaltstart des Verbrennungsmotors, d.h. bevor die Betriebstemperatur des Verbrennungsmotors erreicht ist, ungünstig auf die Funktionsweise eines SCR-Katalysators auswirken.

Nach der Einspritzung des Harnstoffs in wässriger Lösung in den Abgasstrang muss für die SCR-Reaktion zunächst Ammoniak (NH₃) gebildet werden. Hierbei wird das reduzierend wirkende Ammoniak durch die thermische Zersetzung von Harnstoff (Thermolyse) und die Hydrolyse der entstehenden Isocyansäure freigesetzt.

In der ersten Reaktion, der Thermolyse, wird durch den Einfluss der Temperatur Harnstoff in Ammoniak (NH₃) und Isocyansäure (HNCO) umgewandelt. Im zweiten Schritt folgt unter Anwesenheit von Wasser die Hydrolyse, in der die Isocyansäure ebenfalls in Ammoniak unter Bildung von Kohlendioxid (CO₂) umgewandelt wird. Relativ niedrige Temperaturen, wie sie beispielsweise beim Kaltstart des Verbrennungsmotors vorliegen, können den Ablauf dieser Reaktionen verlangsamen.

Die Aufgabe der Erfindung ist es daher, eine Einspritzdüse für ein Reduktionsmitteldosiersystem derart weiterzubilden, dass die Funktionsweise eines SCR-Katalysators, insbesondere bei niedrigen Temperaturen wie sie beispielsweise bei einem Kaltstart eines Verbrennungsmotors vorkommen, d.h. insbesondere bevor die Betriebstemperatur des Verbrennungsmotors erreicht ist, verbessert wird.

Diese Aufgabe wird erfindungsgemäß durch eine Einspritzdüse gemäß Anspruch 1 und ein Reduktionsmitteldosiersystem gemäß Anspruch 12 gelöst.

Vorteilhafte Weiterbildungen der Erfindung sind in den abhängigen Ansprüchen angegeben.

Besonders vorteilhaft bei der Einspritzdüse zur Einspritzung eines Reduktionsmittels in den Abgasstrom eines Verbrennungsmotors zur selektiven katalytischen Reduktion, wobei die Einspritzdüse einen äußeren Düsenmantel, einen in dem Düsenmantel angeordneten Innenkörper sowie einen Düsenkopf mit zumindest einer Austrittsöffnung umfasst, wobei der Düsenmantel einen Reduktionsmitteleinlass aufweist und zwischen dem Düsenmantel und dem Innenkörper zumindest ein vom Reduktionsmitteleinlass zum Düsenkopf verlaufender Strömungskanal ausgebildet ist, wobei die Einspritzdüse zumindest ein Heizelement aufweist, ist es, dass der Strömungskanal zumindest teilweise durch ein Gewinde, insbesondere ein eingängiges oder mehrgängiges Gewinde, um den Innenkörper herum vom Reduktionsmitteleinlass zum Düsenkopf gebildet ist, wobei der Strömungskanal durch mehrere sich in axialer Richtung der Erstreckung des Innenkörpers aneinander anschließende Abschnitte von um den Innenkörper herum verlaufenden Schraubenlinien unterschiedlicher Gewindesteigungen gebildet ist.

Durch die Anordnung des Heizelementes wird eine Erwärmung des Reduktionsmittels während des Transports des Reduktionsmittels durch die beheizte Düse im Inneren der Düse ermöglicht. Ferner wird dadurch eine kompakte Bauweise ermöglicht, da auf weitere Beheizungselemente verzichtet werden kann.

Der Strömungskanal kann dabei zumindest teilweise durch ein eingängiges oder mehrgängiges Gewinde um den Innenkörper herum vom Reduktionsmitteleinlass zum Düsenkopf gebildet sein.

Der Kern der Erfindung liegt darin, durch eine Ausgestaltung des Strömungskanals in der Düse vom Reduktionsmitteleinlass zum Düsenkopf in Form eines eingängigen oder mehrgängigen Gewindes um den Innenkörper herum die Lauflänge vom Reduktionsmitteleinlass zum Düsenkopf der Düse zu verlängern, wodurch gleichzeitig eine Verlängerung der Dauer für die Durchströmung vom Reduktionsmitteleinlass zum Düsenkopf mit der Austrittsöffnung eintritt. Durch die Verlängerung der Verweildauer des Reduktionsmittels innerhalb der Düse wird wiederum der Grad der Erwärmung des Reduktionsmittels gesteigert, insbesondere kann je nach eingestellter Heizleistung eine teilweise oder vollständige Verdampfung des Reduktionsmittels erreicht werden. Durch den Übergang des Reduktionsmittels von der flüssigen Phase in die Dampfphase erfolgt eine erhebliche Ausdehnung und Volumenvergrößerung. Durch die gebildeten Dampfblasen innerhalb des Reduktionsmittels und die damit einhergehende Volumenvergrößerung erfolgt eine Beschleunigung und ein Ausblasen des Reduktionsmittels über die Austrittsöffnung in dem Düsenkopf in den Abgasstrom des Verbrennungsmotors. Durch dieses durch die entstehenden Dampfblasen bewirkte Ausblasen erfolgt eine besonders feine Verteilung des Reduktionsmittels in dem Abgasstrom, wodurch wiederum die Qualität der selektiven katalytischen Reduktion insbesondere in einer Kaltstartphase des Verbrennungsmotors erheblich gesteigert wird.

Dadurch wird eine deutliche Stickoxidreduzierung bei Niedertemperaturen oder bei Kaltstart einer Verbrennungskraftmaschine erzielt. Dies wird insbesondere dadurch erreicht, das Reduktionsmittel insbesondere eine Harnstofflösung, vorzuheizen und die Umsatzprodukte mit möglichst hohem Dampfanteil in den Abgastrakt des Verbrennungsmotors einzuleiten.

Erfindungsgemäß ist der Strömungskanal in Form eines oder mehrerer Gewindegänge ausgebildet, die um den Innenkörper herum verlaufen. Die Gewindegänge können insbesondere einen trapezförmigen Querschnitt aufweisen. Durch die Ausbildung des Strömungskanals vom Reduktionsmitteleinlass zur Austrittsöffnung in Form eines oder mehrerer Gewindegänge wird die Lauflänge und damit die Dauer der Durchströmung vom Reduktionsmitteleinlass zum Düsenkopf mit der Austrittsöffnung erheblich gesteigert.

Dabei schließen sich erfindungsgemäß in axialer Richtung der Düse Abschnitte unterschiedlicher Gewindesteigung aneinander an.

Insbesondere kann der Strömungskanal alternierend durch Abschnitte von Rechtsgewinden gefolgt von Abschnitten von Linksgewinden gebildet sein, sodass sich entlang der Düse in axialer Richtung der Düse insgesamt eine Schlangenlinie ergibt. Mit dem Begriff der Schlangenlinie ist dabei jegliche von einer Geraden abweichende Form mit abrupten oder kurvenförmigen Richtungsänderungen umfasst, die eine Verlängerung der Lauflänge des Strömungskanals vom Reduktionsmitteleinlass zum Düsenkopf bewirken.

Fertigungstechnisch und strömungstechnisch nicht von dem Gegenstand der Ansprüche erfasst ist es jedoch, wenn der Strömungskanal durch ein eingängiges oder mehrgängiges Gewinde mit einer vom Reduktionsmitteleinlass bis zum Düsenkopf durchgehend konstanten Steigung gebildet ist.

Das Heizelement kann zur Erwärmung bis hin zu einer Verdampfung des Reduktionsmittels eingesetzt werden. Hierdurch wird die Aerosolbildung und die Sprayqualität des Reduktionsmittels verbessert und insbesondere die Tröpfchengröße des Reduktionsmittels beim Einspritzen in den Abgasstrom des Verbrennungsmotors verkleinert. Mit deutlich kleineren Tröpfchen des Reduktionsmittels kann die Katalysatorwirkung eines SCR-Katalysators, insbesondere bei relativ niedrigen Abgastemperaturen, insbesondere unterhalb von etwa 200° Celsius, wie sie beispielsweise beim Kaltstart eines Verbrennungsmotors vorherrschen, deutlich verbessert werden, da das eingespritzte Reduktionsmittel aufgrund der kleineren Tröpfchen schneller verdampft.

Insbesondere ist dadurch somit eine Erwärmung des Reduktionsmittels auf ein Temperaturniveau oberhalb der momentanen Abgastemperatur möglich. Dies wird ermöglicht durch das Heizelement, über das Wärmeenergie zugeführt wird. Ferner kann eine Steuerung oder eine Regelung der Heizleistung vorgesehen sein. Hierdurch ist eine Erwärmung des Reduktionsmittels auf ein gewünschtes und/oder vorgebbares Temperaturniveau möglich. Insbesondere ist eine Verdampfung des Wasseranteils und eine Umsetzung der Harnstofflösung in einer beheizten Düse möglich.

Ferner ist eine beginnende bzw. fortgeschrittene Thermolyse des Harnstoffes bereits in der Düse realisierbar. Durch die Führung des Reduktionsmittels durch den Strömungskanal erfolgt eine gute und gleichmäßige Erwärmung des Reduktionsmittels. Hierdurch wird eine optimale Nutzung des Verdampfungsprozesses und daraus entstehender Volumenzunahme zur Ausbringung der Umsatzprodukte über den Düsenkopf und anschließende Vermischung mit dem Abgas erzielt. Des Weiteren ist eine Bereitstellung eines feinen Sprays der noch nicht verdampften und chemisch umgesetzten Bestandteile des Reduktionsmittels möglich. Hierdurch wird eine definierte Verteilung der Reduktionsmittel-Umsatzprodukte in den Abgasstrang realisiert. Daraus resultiert eine zügige Umsetzung des benötigten Reduktionsmittels im Abgasstrang und der erläuterte Vorteil einer beschleunigten Stickoxidreduzierung bei Niedertemperaturen und bei Kaltstart eines Verbrennungsmotors.

Ein weiterer Vorteil liegt darin, dass eine Erwärmung des Reduktionsmittels ohne einen direkten Kontakt des Reduktionsmittels mit dem Heizelement erfolgt. Durch die Leitung des Reduktionsmittels durch den Strömungskanal ergibt sich nur ein geringer Gegendruck innerhalb des Dosiersystems während der Dosierung. Vorteilhaft ist ferner eine Ausnutzung der Abgastemperatur durch eine motornahe Positionierung der Düse am Abgasstrang des Verbrennungsmotors. Der Energiebedarf für die Beheizung der Düse ist dabei minimal.

Durch die Anordnung des Heizelementes ist ferner eine Selbstreinigung von etwaigen inneren Ablagerungen durch eine starke Temperaturerhöhung möglich. Insbesondere kann eine solche Reinigung durchgeführt werden, falls der Gegendruck zu groß wird, was auf Ablagerungen hindeutet. Es kann ein Drucksensor zur Erfassung des Gegendruckes angeordnet sein.

Ferner wird durch eine derartige Anordnung eine einfache Montage in einen Gesamtaufbau eines Reduktionsmitteldosiersystems ermöglicht, da die Beheizungsfunktion bereits in der Düse integriert ist. Die Einspritzdüse weist eine kompakte Bauform und eine geringe Masse auf, sodass auf eine aufwendige Stützkonstruktion am Abgasstrang verzichtet werden kann.

Insbesondere kann das Heizelement elektrisch betätigt sein. Vorzugsweise weist der Düsenmantel an seinem dem Düsenkopf mit der Austrittsöffnung gegenüberliegenden Ende eine Kopfplatte auf, durch welche eine elektrische Anschlussleitung für das Heizelement gelegt ist. Insbesondere kann die Anschlussleitung gegenüber dem Außenkörper abgedichtet sein. Die Kopfplatte kann einstückig oder mehrteilig mit dem Düsenmantel ausgebildet sein.

Ferner kann eine Zerstäubung des Reduktionsmittels mittels Druckluft oder Treibgas erfolgen. Die Zerstäubung kann innerhalb oder außerhalb der Einspritzdüse erfolgen. Hierzu kann die Einspritzdüse, insbesondere der Düsenmantel einen Druckluftanschluss zur Einleitung von Druckluft in die Düse aufweisen. Insbesondere kann der Reduktionsmitteleinlass ein Ventil, insbesondere ein Druckventil und/oder ein Rückschlagventil aufweisen. Aufgrund der teilweisen Verdampfung des Reduktionsmittels ist dies jedoch nicht zwingend erforderlich, da das Reduktionsmittel bereits durch die entstehenden Dampfblasen ausgetrieben wird.

Bevorzugt sind der Düsenmantel und der Innenkörper konzentrisch zueinander angeordnet. Insbesondere kann der Düsenmantel zylindrisch ausgebildet sein und/oder der Innenkörper kann zylindrisch ausgebildet sein.

In einer bevorzugten Ausführungsform weist der Innenkörper zumindest ein Heizelement auf oder ist als Heizelement ausgebildet, insbesondere kann das Heizelement oder der Innenkörper selbst als Heizpatrone ausgebildet sein.

Dadurch, dass der Innenkörper zumindest ein Heizelement aufweist oder als Heizelement ausgebildet ist, findet die Erwärmung im Inneren der Düse statt, sodass Wärmeverluste zur Umgebung der Düse minimiert werden. Ferner kann der Düsenmantel weitere Mittel zur thermischen Isolation gegenüber der Umgebung aufweisen.

Vorzugsweise ist das Heizelement oder der Innenkörper selbst als Heizpatrone ausgebildet. Heizpatronen umfassen üblicherweise einen Mantel vorzugsweise aus einem insbesondere zylindrischen Metallkörper, insbesondere aus Edelstahl. Dadurch wird ein hoher Korrosionsschutz gewährleistet. Im Inneren der Heizpatrone befindet sich vorzugsweise eine Heizwendel, die auf einen Kern, insbesondere aus Keramik, aufgewickelt ist. Der Raum zwischen dem Mantel und dem Kern wird vorzugsweise mit Magnesiumoxid befüllt und vorzugsweise anschließend je nach Anspruch an die Heizleistung verdichtet. Derartige Heizpatronen lassen sich auf eine einfache Art und Weise in die Düse montieren und sind chemisch sowie mechanisch robust.

Alternativ oder kumulativ kann eine Beheizung in Form einer den Düsenmantel umgebenden Heizwendel angeordnet sein. Durch eine derartige um den Düsenmantel herumgewickelte Heizwendel erfolgt eine Beheizung der Düse und eine Wärmeübertragung auf das in dem Strömungskanal geförderte Reduktionsmittel.

Vorzugsweise ist das Heizelement durch eine elektrische Widerstandsheizung gebildet. Besonders vorteilhaft ist dabei, dass die Dauer und die Heizleistung der Beheizung über ein Steuergerät exakt gesteuert und/oder in einem geschlossenen Regelkreis geregelt werden kann.

Besonders bevorzugt weist die Einspritzdüse zumindest einen Temperatursensor auf. Vorzugsweise ist der Temperatursensor innerhalb der Düse stromauf unmittelbar vor der Austrittsöffnung in thermischem Kontakt zu dem Reduktionsmittel angeordnet, um die Temperatur des Reduktionsmittels zu erfassen. Insbesondere kann unter Berücksichtigung des Temperatursignals des Sensors durch ein Steuergerät in einem geschlossenen Regelkreis die Heizleistung des Heizelementes geregelt werden, um die gewünschte Temperatur des Reduktionsmittels unmittelbar vor der Austrittsöffnung einzustellen.

Insbesondere kann ein Temperatursensor in den Düsenkopf integriert sein und/oder am Ende des Strömungskanals unmittelbar vor dem Düsenkopf angeordnet sein.

In einer bevorzugten Ausführungsform ist der Strömungskanal durch ein eingängiges oder mehrgängiges Außengewinde auf der Außenseite des Innenkörpers und/oder auf der Außenseite einer konzentrisch zum Innenkörper angeordneten Hülse gebildet.

Es kann sich somit um ein zusätzliches Bauteil oder den Innenkörper selbst handeln, an welchem ein eingängiges oder mehrgängiges Außengewinde auf der Außenseite angeordnet ist, um den Strömungskanal vom Reduktionsmitteleinlass zum Düsenkopf auszubilden.

Alternativ oder kumulativ ist der Strömungskanal durch ein eingängiges oder mehrgängiges Innengewinde auf der Innenseite des Düsenmantels gebildet. Dabei kann es sich um ein zusätzliches Bauteil in Form einer Hülse bei einer mehrteiligen Ausführung des Düsenmantels handeln, oder es kann sich um den Düsenmantel selbst handeln, im Fall einer einstückigen Ausführung des Düsenmantels.

Die Gewindegänge bilden in diesem Fall den Strömungskanal vom Reduktionsmitteleinlass zum Düsenkopf, der sich in Form eines Gewindes um den Innenkörper herumwindet.

Der Strömungskanal kann somit durch ein Außengewinde auf dem Innenkörper oder einer den Innenkörper umgebenden Hülse und/oder durch ein Innengewinde auf der Innenseite des Düsenmantels oder einer in den Düsenmantel eingesetzten Hülse handeln. Insbesondere kann der Strömungskanal gleichzeitig sowohl durch ein Außengewinde als auch durch ein Innengewinde gebildet sein. In diesem Fall können die Gewindegänge des Außengewindes und des Innengewindes deckungsgleich übereinander liegen oder in ihrem Verlauf, insbesondere in den Gewindesteigungen voneinander abweichen.

Bevorzugt ist der Strömungskanal durch mehrere sich in axialer Richtung der Erstreckung des Innenkörpers aneinander anschließende Abschnitte von um den Innenkörper herum verlaufende Schraubenlinien gebildet. Der Strömungskanal ist somit durch mehrere unterschiedliche Abschnitte gebildet, die sich in Achsrichtung des Innenkörpers aneinander anschließen. Sofern es beispielsweise nicht erforderlich ist, über die gesamte axiale Erstreckung des Innenkörpers einen Strömungskanal in Form eines oder mehrerer Gewindegänge anzuordnen, um das gewünschte Temperaturniveau des Reduktionsmittels an der Austrittsöffnung des Düsenkopfs zu erzielen, kann aus Gründen einer einfacheren und preiswerteren Fertigung der Düse beispielsweise ein Abschnitt mit einem geraden Verlauf des Strömungskanals angeordnet werden. Mit der Achsrichtung des Innenkörpers ist die Erstreckung des Innenkörpers von demjenigen dem Düsenkopf gegenüberliegenden Ende hin zum Düsenkopf bezeichnet. Schlangenlinien können dabei wie erläutert durch eine wiederholte Abfolge eines Abschnittes eines Rechtsgewindes gefolgt von einem Abschnitt eines Linksgewindes gebildet sein.

Vorzugsweise ist der Strömungskanal durch mehrere Gewindegänge gebildet, die untereinander einen oder mehrere Kurzschlussverbindungen aufweisen. Erfindungsgemäß ist der Strömungskanal durch mehrere sich in axialer Richtung der Erstreckung des Innenkörpers aneinander anschließende Abschnitte von um den Innenkörper herum verlaufenden Schraubenlinien unterschiedlicher Gewindesteigungen gebildet.

Durch derartige Kurzschlussverbindungen und Abschnitte unterschiedlicher Gewindesteigungen kann die gewünschte Lauflänge und damit die gewünschte Durchströmungsdauer vom Reduktionsmitteleinlass zum Düsenkopf bei vorgegebenem Massenstrom des Reduktionsmittels festgelegt werden.

Vorzugsweise ist zwischen dem Innenkörper und einer Hülse, auf deren Außenseite der Strömungskanal ausgebildet ist, ein Wärmeleiter angeordnet. Mit dem Begriff, dass auf der Außenseite der Hülse der Strömungskanal ausgebildet ist, ist dabei sowohl die Ausführungsform erfasst, bei der ein Außengewinde in die Hülse eingebracht ist, als auch die Einbringung eines Innengewindes auf der Innenseite des die Hülse umschließenden Düsenmantels, wobei der Düsenmantel einstückig oder mehrteilig ausgeführt sein kann. Die Anordnung des Wärmeleiters zwischen dem Innenkörper und der Hülse dient der Wärmeübertragung auf das in dem Strömungskanal geförderte Reduktionsmittel, insbesondere wenn der Innenkörper das Heizelement aufweist oder der Innenkörper selbst als Heizpatrone ausgebildet ist.

In einer bevorzugten Ausführungsform weist der Strömungskanal zumindest teilweise eine Beschichtung auf, wobei die Beschichtung zumindest einen Hydrolysekatalysator, insbesondere TiO₂ und/oder SiO₂ und/oder ZrO₂ und/oder einen Korrosionsschutz, insbesondere Al₂O₃ und/oder FeCrAl, aufweist.

Vorzugsweise weist der Strömungskanal zumindest teilweise eine Beschichtung auf, wobei die Beschichtung anorganische Oxide aufweist, insbesondere mit den Trägerstoffen Nb₂O₅ und/oder Ta₂O₅ und/oder WOs und/oder Aluminiumsilikat und/oder Zeolithe.

Insbesondere kann/können die Innenwandung des Düsenmantels und/oder die Außenwandung des Innenkörpers mittels einer Beschichtung beschichtet sein. Dabei kann der Innenkörper mit einer ersten Art einer Beschichtung und der Düsenmantel mit einer anderen oder einer gleichartigen Beschichtung beschichtet sein. Die Beschichtung kann zum Korrosionsschutz und/oder zur Begünstigung der gewünschten Reaktionen des Reduktionsmittels beitragen.

Insbesondere kann es sich bei der Beschichtung somit um eine sogenannte Hydrolysebeschichtung handeln, d.h. dass der Strömungskanal zumindest teilweise eine Beschichtung aufweist, wobei die Beschichtung zumindest einen Hydrolysekatalysator aufweist. Mit dem Begriff der Hydrolysebeschichtung ist eine Beschichtung gemeint, welche zumindest einen Bestandteil wie beispielsweise TiO₂ aufweist, der eine Hydrolyse des Reduktionsmittels begünstigt. Dadurch kann die Hydrolysetemperatur abgesenkt werden, sodass erhöhte Umsatzraten zu Ammoniak ermöglicht und somit feste Zerfallsproduktmenge verringert werden können.

Insbesondere kann die Beschichtung einen Bestandteil wie beispielsweise Aluminiumoxid Al₂O₃ und/oder FeCrAl aufweisen, welcher dem Korrosionsschutz dient.

Insbesondere kann die Beschichtung TiO₂ und/oder Al₂O₃ und/oder einen H-Zeolith, insbesondere H-Mordenit und/oder H-ZSMs, und/oder SiO₂ und/oder ZrO₂ aufweisen. Bei einer kumulativen Verwendung von Aluminiumoxid in einer Abmischung der Beschichtung mit TiO₂ und/oder einem H-Zeolith und/oder SiO₂ und/oder ZrO₂ kann das Verhältnis von Aluminiumoxid zu den anderen Verbindungen 9:1 bis 1:9, insbesondere 8:2 oder 7:3 oder 6:4 oder 5:5 oder 4:5 oder 3:7 oder 2:8, betragen. Insbesondere kann die Beschichtung insbesondere feinteilige anorganische Oxide, insbesondere Nb₂O₅ und/oder Ta₂O₅ und/oder WO₃, und/oder einen Aluminiumsilikat und/oder einen H-Zeolith aufweisen. Insbesondere kann die Beschichtung FeCrAl, insbesondere als Legierung, aufweisen.

Vorzugsweise ist der Düsenkopf durch einen Düsenkonus und eine Düsenkappe gebildet, wobei die Düsenkappe zumindest eine Austrittsöffnung aufweist. Insbesondere kann der Düsenmantel den Düsenkopf teilweise oder vollständig umhüllen.

Bevorzugt weist der Düsenkopf zumindest einen Reduktionsmittelaustritt auf, insbesondere kann der Düsenkopf zu dem Reduktionsmittelaustritt hin konisch verjüngt ausgebildet sein. Insbesondere kann der Düsenkopf mehrere Reduktionsmittelaustritte aufweisen.

Bevorzugt ist der Düsenkopf und/oder der Innenkörper stoffschlüssig und/oder kraftschlüssig und/oder formschlüssig mittelbar oder unmittelbar mit dem Düsenmantel verbunden. Insbesondere können der Düsenkopf und/oder der Innenkörper reversibel an dem Düsenmantel, insbesondere kraftschlüssig und/oder formschlüssig, montiert sein. Auf diese Weise ist der Düsenkopf und/oder der Innenkörper entnehmbar, sodass eine Wartung, insbesondere eine Reinigung der Einspritzdüse während ihrer Lebensdauer ermöglicht wird und/oder einzelne Elemente ausgetauscht werden können.

Vorzugsweise weist der Düsenmantel eine Druckluftkammer und einen in die Druckluftkammer mündenden Drucklufteinlass auf. Insbesondere kann mittels einer derartigen Druckluftkammer ein Hitzeschild ausgebildet werden, der die Reduktionsmitteldüse zumindest teilweise thermisch isoliert. Hierzu kann die Druckluftkammer den Innenkörper zumindest teilweise oder vollständig umhüllen. Insbesondere kann die Druckluftkammer mittelbar oder unmittelbar in den Reduktionsmittelaustritt des Düsenkopfes münden. Hierdurch kann eine Zerstäubung des Reduktionsmittels mittels der Druckluft erfolgen.

Alternativ oder kumulativ kann der Düsenkopf zumindest einen Druckluftaustritt aufweisen, wobei der Strömungskanal, der das Reduktionsmittel führt, mittelbar oder unmittelbar in den Reduktionsmittelaustritt mündet und die Druckluftkammer mittelbar oder unmittelbar in den Druckluftaustritt mündet. Auf diese Weise kann die Düse als außenmischende Zweistoffdüse ausgebildet werden. Insbesondere können dabei der Reduktionsmittelaustritt und der Druckluftaustritt konzentrisch angeordnet sein. Insbesondere kann der Druckluftaustritt den Reduktionsmittelaustritt dabei zumindest teilweise oder vollständig umgeben. Alternativ kann der Reduktionsmittelaustritt den Druckluftaustritt zumindest teilweise oder vollständig umgeben. Bei dieser Art der außenmischenden Zweistoffdüse wird somit das Gemisch aus Harnstofflösung und Druckluft außerhalb der Düse gebildet.

Alternativ oder kumulativ kann eine Gemischbildung innerhalb der Düse erfolgen. Somit kann auch eine innenmischende Düse realisiert werden. Bei einer solchen innenmischenden Düse mündet der Druckluftaustritt in den das Reduktionsmittel führenden Strömungskanal.

Ferner kann die Düse derart ausgebildet sein, sodass eine Kombination von außerhalb der Düse und innerhalb der Düse erfolgender Gemischaufbereitung erfolgt.

Besonders vorteilhaft bei dem Reduktionsmitteldosiersystem zur Einspritzung eines Reduktionsmittels in den Abgasstrom eines Verbrennungsmotors zur selektiven katalytischen Reduktion, mit zumindest einer Förderpumpe, mittels derer Reduktionsmittel aus einem Reduktionsmitteltank über eine Saugleitung aus dem Tank angesaugt, über zumindest eine Druckleitung gefördert und über zumindest eine Düse in den Abgasstrom des Verbrennungsmotors eingeleitet wird, ist es, dass die zumindest eine Düse durch eine erfindungsgemäße Einspritzdüse gebildet ist.

Die Begriffe Reduktionsmitteldosiersystem bzw. Dosiersystem werden im Sinne der Erfindung synonym verwendet. Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt.

Durch die Einspritzdüse mit integriertem Heizelement wird ein kompakter und montagefreundlicher Gesamtaufbau des Reduktionsmitteldosiersystems realisiert.

Die vielfach eingesetzte Reduktionsmittellösung gemäß DIN 70070 gefriert aufgrund ihres Wassergehaltes bei ca. -11° C. Daher ist es vorteilhaft, eine Beheizungseinrichtung beispielsweise innerhalb des Dosiersystems zur Beheizung der Reduktionsmittellösung für den Fall sehr niedriger Umgebungstemperaturen vorzusehen. Eine solche Beheizungseinrichtung kann kumulativ zu dem Heizelement angeordnet sein, insbesondere innerhalb des Tanks.

Vorzugsweise weist das Reduktionsmitteldosiersystem ein Steuergerät auf, mittels dessen die Förderpumpe und/oder das Heizelement der Einspritzdüse angesteuert wird, insbesondere in einem geschlossenen Regelkreis in Abhängigkeit des Betriebszustandes geregelt wird.

Mittels des Steuergerätes kann insbesondere die Versorgung der Förderpumpe und/oder des Heizelementes der Einspritzdüse mit elektrischer Energie erfolgen. Die Regelung der Förderpumpe und/oder des Heizelementes der Einspritzdüse erfolgt bevorzugt in Abhängigkeit des Betriebszustandes, d.h. insbesondere der Abgastemperatur und/oder der Reduktionsmitteltemperatur am Düsenkopf, die mittels eines Temperatursensors in der Einspritzdüse ermittelt werden kann.

Insbesondere kann das Dosiersystem eine Druckluftversorgung aufweisen und das Reduktionsmittel wird mittels Druckluft, insbesondere innerhalb und/oder außerhalb der Düse, zerstäubt.

Ein Ausführungsbeispiel der Erfindung ist in den Figuren dargestellt und wird nachfolgend näher erläutert. Es zeigen:
- Figur 1: eine schematische Darstellung eines Reduktionsm itteldosiersystems;
- Figur 2: eine Schnittdarstellung einer nicht erfindungsgemäßen Einspritzdüse des Reduktionsmitteldosiersystems nach Figur 1;
- Figur 3: eine Ansicht des Strömungskanals einer nicht erfindungsgemäßen Einspritzdüse nach Figur 2.

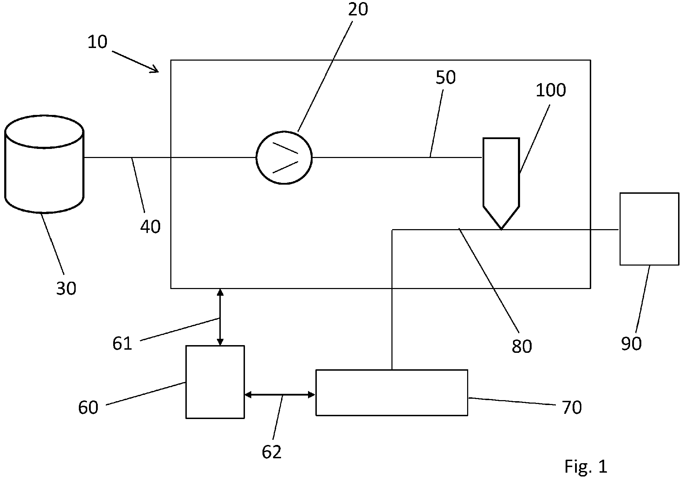

Identische Bauteile sind mit identischen Bezugszeichen versehen. Figur 1 zeigt eine schematische Darstellung eines Reduktionsmitteldosiersystems 10 zur Einspritzung eines Reduktionsmittels in den Abgastrakt 80 eines Verbrennungsmotors 70 zur selektiven katalytischen Reduktion. Mittels einer Förderpumpe 20 wird über eine Saugleitung 40 ein Reduktionsmittel aus einem Reduktionsmitteltank 30 angesaugt und über eine Druckleitung 50 zu der Einspritzdüse 100 gefördert. Über die Einspritzdüse 100 wird das Reduktionsmittel in den Abgastrakt 80 des Verbrennungsmotors 70 eingeleitet. Im Abgastrakt 80 des Verbrennungsmotors ist der Einleitungsstelle für das Reduktionsmittel ein Katalysator zur selektiven katalytischen Reduktion, ein sogenannter SCR-Katalysator 90 nachgeschaltet. Die Ansteuerung des Dosiersystems 10 erfolgt mittels des Steuergerätes 60, welches über eine Daten- und Steuerleitung 61 mit dem Dosiersystem 10 kommuniziert, sowie über eine weitere Daten- und Steuerleitung 62 mit dem Verbrennungsmotor 70 kommuniziert. Über die Daten- und Steuerleitungen 61, 62 werden sowohl Betriebszustände und Sensorsignale als auch Steuersignale übertragen. Die Übertragung erfolgt in beiden Fällen bidirektional, wie dies durch die Doppelpfeile 61, 62 angedeutet ist.

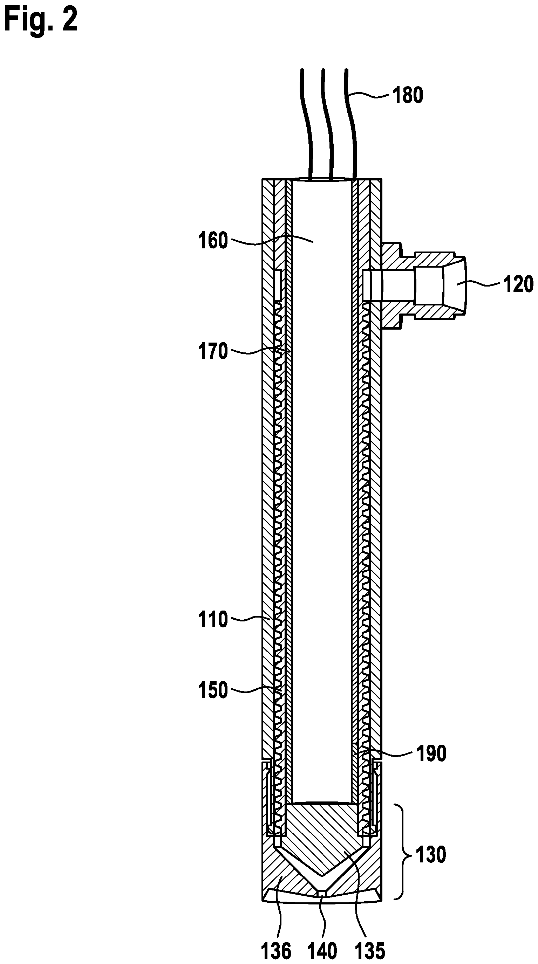

Figur 2 zeigt die Einspritzdüse 100 nach Figur 1 in einer Schnittansicht. Die Düse 100 weist einen Düsenmantel 110 und einen in dem Düsenmantel 100 angeordneten Innenkörper 160 auf. Der Düsenmantel weist einen Reduktionsmitteleinlass 120 auf. An den Reduktionsmitteleinlass 120 wird die Druckleitung 50 von der Förderpumpe 20 kommend angeschlossen. An dem in Figur 2 unteren Ende weist die Düse 100 den Düsenkopf 130 auf, der durch den Düsenkonus 135 und die Düsenkappe 136 gebildet ist. In der Düsenkappe 136 befindet sich eine Austrittsöffnung 140, durch die das Reduktionsmittel aus der Düse 100 in den Abgastrakt des Verbrennungsmotors eingeleitet wird. Ferner weist die Einspritzdüse 100 einen Temperatursensor 190 auf.

Der zylindrische Innenkörper 160 ist als Heizelement ausgebildet. Der Innenkörper weist an seinem dem Düsenkopf 130 gegenüberliegenden Ende elektrische Anschlüsse 180 auf, die einerseits der Ansteuerung und Versorgung des Heizelementes mit elektrischer Energie durch das in Figur 1 dargestellte Steuergerät 60 dienen. Ferner dienen die elektrischen Anschlüsse der Übertragung der Sensorsignale vom Temperatursensor 190 an das Steuergerät 60.

Der Innenkörper 160 ist als Heizelement in Form einer Heizpatrone ausgebildet. Der Innenkörper 160 ist mittels einer Kopfplatte an dem Düsenmantel 110 montiert, wobei die elektrischen Anschlussleitungen 180 durch die Kopfplatte gelegt sind. Der Düsenmantel 110 und der Innenkörper 160 sind beide zylindrisch ausgebildet und konzentrisch zueinander angeordnet.

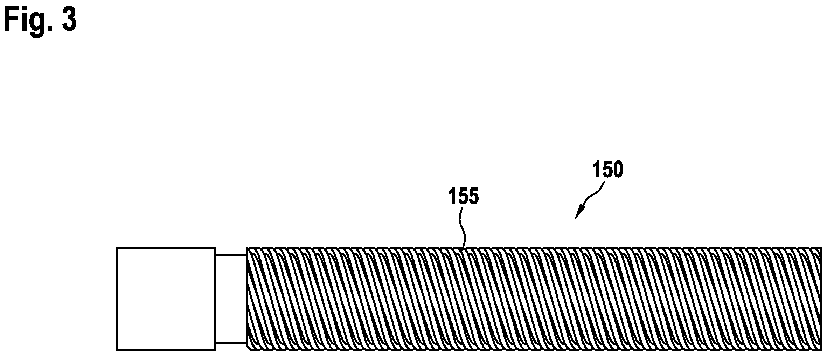

Zwischen dem Düsenmantel 110 und dem Innenkörper 160 ist konzentrisch eine Hülse 150 aus wärmeleitendem Material angeordnet, auf deren Außenseite ein in dem darestellten**,** nicht erfindungsgemäßen Beispiel sechsgängiges Außengewinde eingebracht ist, wie dies in Figur 3 dargestellt ist. Die Gewindegänge in der Hülse 150 bilden den Strömungskanal 155 für das Reduktionsmittel und verbinden den Reduktionsmitteleinlass 120 mit dem Düsenkopf 130.

Durch eine Variation der Gewindesteigung kann die gewünschte Lauflänge des Strömungskanals 155 vom Reduktionsmitteleinlass 120 zum Düsenkopf 130 festgelegt werden. Über die Definition der gewünschten Lauflänge des Strömungskanals 155 erfolgt damit gleichzeitig die Festlegung der Verweildauer des Reduktionsmittels innerhalb der Düse 100 bei vorgegebenem Massenstrom der Förderpumpe 20.

Zwischen dem Innenkörper 160 und der zu dem Innenkörper 160 konzentrischen Hülse 150 ist ein Wärmeübertrager 170 angeordnet. Dieser Wärmeübertrager 170 dient der Wärmeübertragung von dem als Heizpatrone ausgebildeten Innenkörper 160 zu der Hülse 150 und damit auf das in dem Strömungskanal 155 strömende Reduktionsmittel. Der Wärmeübertrager 170 besteht aus einem wärmeleitenden Material und weist somit eine gute Wärmeleitfähigkeit auf.

Durch die Ausbildung des Innenkörpers 160 als Heizpatrone kann das durch die Düse 100 transportierte Reduktionsmittel gleichzeitig während des Transportes im Inneren der Düse 100 in einem kompakten Aufbau erwärmt und zumindest teilweise verdampft werden.

Durch die Einspritzdüse 100 kann die Leistung eines SCR-Katalysators durch bereits erhitztes und teilweise verdampftes Reduktionsmittel verbessert werden, wobei eine solche Düse ferner zu einem kompakten und montagefreundlichen Aufbau des Reduktionsmitteldosiersystems 10 beiträgt, da das Heizelement in die Düse 100 integriert ist und die Ausbildung des Strömungskanals 155 in der Düse 100 die Erhitzung und Verdampfung des Reduktionsmittels durch die Verlängerung der Lauflänge vom Reduktionsmitteleinlass 120 zum Düsenkopf 130 ermöglicht. Aufgrund der Ausbildung des Strömungskanals 155 in Form mehrerer den Innenkörper 160 herum verlaufender Gewindegänge wird die Verweildauer des geförderten Reduktionsmittels in der Düse 100 soweit gesteigert, dass ein Erhitzen und ggf. Verdampfen des Reduktionsmittels möglich werden. Hierdurch wird die Qualität der Stickoxidreduktion innerhalb des SCR-Katalysators insbesondere in Kaltstartphasen des Verbrennungsmotors 70 verbessert.

## Patentansprüche

1. Einspritzdüse (100) zur Einspritzung eines Reduktionsmittels in den Abgasstrom eines Verbrennungsmotors (70) zur selektiven katalytischen Reduktion, wobei die Einspritzdüse (100) einen äußeren Düsenmantel (110), einen in dem Düsenmantel (110) angeordneten Innenkörper (160) sowie einen Düsenkopf (130) mit zumindest einer Austrittsöffnung (140) umfasst, wobei der Düsenmantel (110) einen Reduktionsmitteleinlass (120) aufweist und zwischen dem Düsenmantel (110) und dem Innenkörper (160) zumindest ein vom Reduktionsmitteleinlass (120) zum Düsenkopf (130) verlaufender Strömungskanal (155) ausgebildet ist, wobei die Einspritzdüse (100) zumindest ein Heizelement aufweist, **dadurch gekennzeichnet, dass** der Strömungskanal (155) zumindest teilweise durch ein Gewinde, insbesondere ein eingängiges oder mehrgängiges Gewinde, um den Innenkörper (160) herum vom Reduktionsmitteleinlass (120) zum Düsenkopf (130) gebildet ist, wobei der Strömungskanal (155) durch mehrere sich in axialer Richtung der Erstreckung des Innenkörpers (160) aneinander anschließende Abschnitte von um den Innenkörper (160) herum verlaufenden Schraubenlinien unterschiedlicher Gewindesteigungen gebildet ist.

2. Einspritzdüse (100) nach Anspruch 1, **dadurch gekennzeichnet, dass** der Innenkörper (160) zumindest ein Heizelement aufweist oder als Heizelement ausgebildet ist, insbesondere dass das Heizelement oder der Innenkörper (160) selbst als Heizpatrone ausgebildet ist.

3. Einspritzdüse (100) nach Anspruch 1 oder 2, **dadurch gekennzeichnet, dass** das Heizelement durch eine elektrische Widerstandsheizung gebildet ist.

4. Einspritzdüse (100) nach einem der vorherigen Ansprüche, **dadurch gekennzeichnet, dass** die Einspritzdüse (100) zumindest einen Temperatursensor (190) aufweist.

5. Einspritzdüse (100) nach einem der vorherigen Ansprüche, **dadurch gekennzeichnet, dass** der Strömungskanal (155) durch ein eingängiges oder mehrgängiges Außengewinde auf der Außenseite des Innenkörpers (160) und/oder auf der Außenseite einer konzentrisch zum Innenkörper (160) angeordneten Hülse (150) gebildet ist.

6. Einspritzdüse (100) nach einem der vorherigen Ansprüche, **dadurch gekennzeichnet, dass** der Strömungskanal (155) durch ein eingängiges oder mehrgängiges Innengewinde auf der Innenseite des Düsenmantels (110) gebildet ist.

7. Einspritzdüse (100) nach einem der vorherigen Ansprüche, **dadurch gekennzeichnet, dass** der Strömungskanal (155) durch mehrere Gewindegänge gebildet ist, die untereinander einen oder mehrere Kurzschlussverbindungen aufweisen.

8. Einspritzdüse (100) nach einem der vorherigen Ansprüche, **dadurch gekennzeichnet, dass** zwischen dem Innenkörper (160) und einer Hülse (150), auf deren Außenseite der Strömungskanal (155) ausgebildet ist, ein Wärmeleiter (170) angeordnet ist.

9. Einspritzdüse (100) nach einem der vorherigen Ansprüche, **dadurch gekennzeichnet, dass** der Strömungskanal (155) zumindest teilweise eine Beschichtung aufweist, wobei die Beschichtung zumindest einen Hydrolysekatalysator, insbesondere TiO₂ und/oder SiO₂ und/oder ZrO₂ und/oder einen Korrosionsschutz, insbesondere Al₂O₃ und/oder FeCrAl, aufweist.

10. Einspritzdüse (100) nach einem der vorherigen Ansprüche, **dadurch gekennzeichnet, dass** der Strömungskanal (155) zumindest teilweise eine Beschichtung aufweist, wobei die Beschichtung anorganische Oxide aufweist, insbesondere mit den Trägerstoffen Nb₂O₅ und/oder Ta₂O₅ und/oder WOs und/oder Aluminiumsilikat und/oder Zeolithe.

11. Einspritzdüse (100) nach einem der vorherigen Ansprüche, **dadurch gekennzeichnet, dass** der Düsenkopf (130) durch einen Düsenkonus (135) und eine Düsenkappe (136) gebildet ist, wobei die Düsenkappe (136) zumindest eine Austrittsöffnung (140) aufweist.

12. Reduktionsmitteldosiersystem (10) zur Einspritzung eines Reduktionsmittels in den Abgasstrom eines Verbrennungsmotors (70) zur selektiven katalytischen Reduktion, mit zumindest einer Förderpumpe (20), mittels derer Reduktionsmittel aus einem Reduktionsmitteltank (30) über eine Saugleitung (40) aus dem Tank (30) angesaugt, über zumindest eine Druckleitung (50) gefördert und über zumindest eine Düse (100) in den Abgasstrom des Verbrennungsmotors (70) eingeleitet wird, **dadurch gekennzeichnet, dass** die zumindest eine Düse durch eine Einspritzdüse (100) nach einem der vorherigen Ansprüche gebildet ist.

13. Reduktionsmitteldosiersystem (10) nach Anspruch 12, **dadurch gekennzeichnet, dass** das Reduktionsmitteldosiersystem (10) ein Steuergerät (60) aufweist, mittels dessen die Förderpumpe (20) und/oder das Heizelement der Einspritzdüse angesteuert wird, insbesondere in einem geschlossenen Regelkreis in Abhängigkeit des Betriebszustandes geregelt wird.

14. Verfahren zum Betrieb eines Reduktionsmitteldosiersystems (10) zur Einspritzung eines Reduktionsmittels in den Abgasstrom eines Verbrennungsmotors (70) zur selektiven katalytischen Reduktion, mit zumindest einer Förderpumpe (20), mittels derer Reduktionsmittel aus einem Reduktionsmitteltank (30) über eine Saugleitung (40) aus dem Tank (30) angesaugt, über zumindest eine Druckleitung (50) gefördert und über zumindest eine Düse (100) in den Abgasstrom des Verbrennungsmotors (70) eingeleitet wird, wobei die Einspritzdüse (100) einen äußeren Düsenmantel (110), einen in dem Düsenmantel (110) angeordneten Innenkörper (160) sowie einen Düsenkopf (130) mit zumindest einer Austrittsöffnung (140) umfasst, wobei der Düsenmantel (110) einen Reduktionsmitteleinlass (120) aufweist und zwischen dem Düsenmantel (110) und dem Innenkörper (160) zumindest ein vom Reduktionsmitteleinlass (120) zum Düsenkopf (130) verlaufender Strömungskanal (155) ausgebildet ist, wobei die Einspritzdüse (100) zumindest ein Heizelement aufweist, **dadurch gekennzeichnet, dass** der Strömungskanal (155) zumindest teilweise durch ein Gewinde, insbesondere ein eingängiges oder mehrgängiges Gewinde, um den Innenkörper (160) herum vom Reduktionsmitteleinlass (120) zum Düsenkopf (130) gebildet ist, wobei der Strömungskanal (155) durch mehrere sich in axialer Richtung der Erstreckung des Innenkörpers (160) aneinander anschließende Abschnitte von um den Innenkörper (160) herum verlaufenden Schraubenlinien unterschiedlicher Gewindesteigungen gebildet ist und das durch die Düse (100) transportierte Reduktionsmittel gleichzeitig während des Transportes im Inneren der Düse (100) erwärmt und zumindest teilweise verdampft wird.

## Claims

1. Injection nozzle (100) for injecting a reducing agent into the exhaust gas flow of an internal combustion engine (70) for selective catalytic reduction, wherein the injection nozzle 100) includes an outer nozzle jacket (110), an inner body (160) arranged in the nozzle jacket (110) and a nozzle head (130) having at least one outlet opening (140), wherein the nozzle jacket (110) has a reduction agent inlet (120) and between the nozzle jacket (110) and the inner body (160) is formed at least one flow channel (155) running from the reduction agent inlet (120) to the nozzle head (130), wherein the injection nozzle (100) has at least one heating element, **characterised in that** the flow channel (155) is formed at least partially by a thread, in particular a single thread or multiple thread, around the inner body (160) from the reduction agent inlet (120) of the nozzle head (130), wherein the flow channel (155) is formed by several portions, connected to one another in axial direction of the extension of the inner body (160), of screw lines of different thread pitches running around the inner body (160).

2. Injection nozzle (100) according to claim 1, **characterised in that** the inner body (160) has at least one heating element or is formed as a heating element, in particular that the heating element or the inner body (160) is itself designed as a heating cartridge.

3. Injection nozzle (100) according to claim 1 or 2, **characterised in that** the heating element is formed by an electrical resistance heating element.

4. Injection nozzle (100) according to any of the preceding claims, **characterised in that** the injection nozzle (100) has at least one temperature sensor (190).

5. Injection nozzle (100) according to any of the preceding claims, **characterised in that** the flow channel (155) is formed by a single-thread or multiple-thread outer thread on the outside of the inner body (160) and/or on the outside of a sheath (150) arranged concentrically to the inner body (160).

6. Injection nozzle (100) according to any of the preceding claims, **characterised in that** the flow channel (155) is formed by a single-thread or multiple-thread inner thread on the inside of the nozzle jacket (110).

7. Injection nozzle (100) according to any of the preceding claims **characterised in that** the flow channel (155) is formed by several threads which have one or several short circuit connections between them.

8. Injection nozzle (100) according to any of the preceding claims, **characterised in that** between the inner body (160) and a sheath (150), on the outer side of which the flow channel (155) is formed, a thermal conductor (170) is arranged.

9. Injection nozzle (100) according to any of the preceding claims, **characterised in that** the flow channel (155) has an at least partial coating, wherein the coating has at least one hydrolysis catalyst, in particular TiO₂and/or SiO₂and/or ZrO₂, and/or a corrosion protection means, in particular Al₂O₃and/or FeCrAl.

10. Injection nozzle (100) according to any of the preceding claims, **characterised in that** the flow channel (155) has an at least partial coating, wherein the coating has inorganic oxides in particular with the carriers Nb₂O₅ and/or Ta₂O₅ and/or WOs and/or aluminium silicate and/or zeolites.

11. Injection nozzle (100) according to any of the preceding claims, **characterised in that** the nozzle head (130) is formed by a nozzle cone (135) and a nozzle cap (136), wherein the nozzle cap (136) has at least one outlet opening (140).

12. Reducing agent metering system (10) for injecting a reducing agent into the exhaust gas flow of an internal combustion engine (70) for selective catalytic reduction, having at least one conveying pump (20) by means of which reduction agent is suctioned out of a reduction agent tank (30) via an extraction line (40) out of the tank (30), is conveyed by way of at least one pressure line (50) and is introduced via at least one nozzle (100) into the exhaust gas flow of the internal combustion engine (70), **characterised in that** the at least one nozzle is formed by an injection nozzle (100) according to any of the preceding claims.

13. Reducing agent metering system (10) according to claim 12, **characterised in that** the reducing agent metering system (10) has a control device (60) by means of which the conveying pump (20) and/or the heating element of the injection nozzle controls, in particular is closed-loop controlled in a closed regulating circuit as a function of the operating state.

14. Method for operating a reducing agent metering system (10) for injecting a reducing agent into the exhaust gas flow of an internal combustion engine (70) for selective catalytic reduction, having at least one conveying pump (20) by means of which reducing agent is suctioned out of a reducing agent tank (30) via an extraction line (40) out of the tank (30), is conveyed by way of at least one pressure line (50) and is introduced via at least one nozzle (100) into the exhaust gas flow of the internal combustion engine (70), wherein the injection nozzle (100) comprises an outer nozzle jacket (110), an inner body (160) arranged in the nozzle jacket (110) and a nozzle head (130) having at least one outlet opening (140), wherein the nozzle jacket (110) has a reducing agent inlet (120) and between the nozzle jacket (110) and the inner body (160) is formed at least one flow channel (155) running from the reducing agent inlet (120) to the nozzle head (130), wherein the injection nozzle (100) has at least one heating element, **characterised in that** the flow channel (155) is formed at least partially by a thread, in particular a single thread or multiple thread, about the inner body (160) from the reducing agent inlet (120) to the nozzle head (130), wherein the flow channel (155) is formed by several portions, connected to one another in axial direction of the extension of the inner body (160), of screw lines of different thread pitches running around the inner body (160) and the reducing agent transported by the nozzle (100) is simultaneously heated during the transport in the interior of the nozzle (100) and is at least partially evaporated.

## Revendications

1. Buse d'injection (100) destinée à l'injection d'un agent de réduction dans le courant de gaz d'échappement d'un moteur à combustion (70) destiné à la réduction catalytique sélective, dans laquelle la buse d'injection (100) comprend une gaine de buse externe (110), un corps interne (160) disposé dans la gaine de buse (110) ainsi qu'une tête de buse (130) avec au moins une ouverture de sortie (140), dans laquelle la gaine de buse (110) présente une entrée d'agent de réduction (120) et au moins un canal d'écoulement (155) s'étendant de l'entrée d'agent de réduction (120) à la tête de buse (130) est réalisé entre la gaine de buse (110) et le corps interne (160), dans laquelle la buse d'injection (100) présente au moins un élément chauffant, **caractérisée en ce que** le canal d'écoulement (155) est formé au moins partiellement par le biais d'un filetage, en particulier un filetage à un ou plusieurs filets, autour du corps interne (160) de l'entrée d'agent de réduction (120) à la tête de buse (130), dans laquelle le canal d'écoulement (155) est formé par le biais de plusieurs sections se raccordant les unes aux autres dans la direction axiale de l'étendue du corps interne (160) par des hélices de différents pas de filetage et s'étendant autour du corps interne (160).

2. Buse d'injection (100) selon la revendication 1, **caractérisée en ce que** le corps interne (160) présente au moins un élément chauffant ou est réalisé en tant qu'élément chauffant, en particulier **en ce que** l'élément chauffant ou le corps interne (160) est réalisé en tant que cartouche chauffante.

3. Buse d'injection (100) selon la revendication 1 ou 2, **caractérisée en ce que** l'élément chauffant est formé par le biais d'un chauffage par résistance électrique.

4. Buse d'injection (100) selon l'une quelconque des revendications précédentes, **caractérisée en ce que** la buse d'injection (100) présente au moins un capteur de température (190).

5. Buse d'injection (100) selon l'une quelconque des revendications précédentes, **caractérisée en ce que** le canal d'écoulement (155) est formé par le biais d'un filetage externe à un ou plusieurs filets sur la face externe du corps interne (160) et/ou sur la face externe d'une douille (150) disposée concentriquement par rapport au corps interne (160).

6. Buse d'injection (100) selon l'une quelconque des revendications précédentes, **caractérisée en ce que** le canal d'écoulement (155) est formé par le biais d'un filetage externe à un ou plusieurs filets sur la face interne de la gaine de buse (110).

7. Buse d'injection (100) selon l'une quelconque des revendications précédentes, **caractérisée en ce que** le canal d'écoulement (155) est formé par le biais de plusieurs filets qui présentent entre eux une ou plusieurs connexions en court-circuit.

8. Buse d'injection (100) selon l'une quelconque des revendications précédentes, **caractérisée en ce que**, entre le corps interne (160) et une douille (150), sur la face externe de laquelle le canal d'écoulement (155) est réalisé, un conducteur de chaleur (170) est disposé.

9. Buse d'injection (100) selon l'une quelconque des revendications précédentes, **caractérisée en ce que** le canal d'écoulement (155) présente au moins partiellement un revêtement, dans laquelle le revêtement présente au moins un catalyseur d'hydrolyse, en particulier TiO₂ et/ou SiO₂ et/ou ZrO₂ et/ou une protection anticorrosion, en particulier Al₂O₃ et/ou FeCrAI.

10. Buse d'injection (100) selon l'une quelconque des revendications précédentes, **caractérisée en ce que** le canal d'écoulement (155) présente au moins partiellement un revêtement, dans laquelle le revêtement présente des oxydes inorganiques, en particulier avec les matériaux de support Nb₂O₅ et/ou Ta₂O₅ et/ou WOs et/ou du silicate d'aluminium et/ou de la zéolithe.

11. Buse d'injection (100) selon l'une quelconque des revendications précédentes, **caractérisée en ce que** la tête de buse (130) est formée par le biais d'un cône de buse (135) et d'un capuchon de buse (136), dans laquelle le capuchon de buse (136) présente au moins une ouverture de sortie (140).

12. Système de dosage d'agent de réduction (10) destiné à l'injection d'un agent de réduction dans le courant de gaz d'échappement d'un moteur à combustion (70) destiné à la réduction catalytique sélective, avec au moins une pompe de refoulement (20), au moyen de laquelle un agent de réduction issu d'un réservoir d'agent de réduction (30) est aspiré du réservoir (30) via une conduite d'aspiration (40), est refoulé via au moins une conduite de pression (50) et est introduit via au moins une buse (100) dans le courant de gaz d'écoulement du moteur à combustion (70), **caractérisé en ce que** l'au moins une buse est formée par le biais d'une buse d'injection (100) selon l'une quelconque des revendications précédentes.

13. Système de dosage d'agent de réduction (10) selon la revendication 12, **caractérisé en ce que** le système de dosage d'agent de réduction (10) présente un appareil de commande (60) au moyen duquel la pompe de refoulement (20) et/ou l'élément chauffant de la buse d'injection sont commandés, en particulier sont réglés dans un circuit de commande fermé en fonction de l'état de fonctionnement.

14. Procédé destiné au fonctionnement d'un système de dosage d'agent de réduction (10) destiné à l'injection d'un agent de réduction dans le courant de gaz d'échappement d'un moteur à combustion (70) destiné à la réduction catalytique, avec au moins une pompe de refoulement (20), au moyen de laquelle un agent de réduction issu d'un réservoir d'agent de réduction (30) est aspiré du réservoir (30) via une conduite d'aspiration (40), est refoulé via au moins une conduite de pression (50) et est introduit dans le courant de gaz d'échappement du moteur à combustion (70) via au moins une buse (100), dans lequel la buse d'injection (100) comprend une gaine de buse externe (110), un corps interne (160) disposé dans la gaine de buse (110) ainsi qu'une tête de buse (130) avec au moins une ouverture de sortie (140), dans lequel la gaine de buse (110) présente une entrée d'agent de réduction (120) et au moins un canal d'écoulement (155) s'étendant de l'entrée d'agent de réduction (120) à la tête de buse (130) est réalisé entre la gaine de buse (110) et le corps interne (160), dans lequel la buse d'injection (100) présente au moins un élément chauffant, **caractérisé en ce que** le canal d'écoulement (155) est formé au moins partiellement par le biais d'un filetage, en particulier un filetage à un ou plusieurs filets, autour du corps interne (160) de l'entrée d'agent de réduction (120) à la tête de buse (130), dans lequel le canal d'écoulement (155) est formé par le biais de plusieurs sections se raccordant les unes aux autres dans la direction axiale de l'étendue du corps interne (160) par des hélices de différents pas de filetage et s'étendant autour du corps interne (160) et l'agent de réduction transporté par le biais de la buse (100) est réchauffé simultanément pendant le transport à l'intérieur de la buse (100) et est évaporé au moins partiellement.
